# EUROPÄISCHE PATENTSCHRIFT

(11) **EP 3 770 520 B1**
(45) Veröffentlichungstag und Bekanntmachung des Hinweises auf die Patenterteilung: **27.12.2023**
(21) Anmeldenummer: 20184148.3
(22) Anmeldetag: 06.07.2020
(51) Int. Cl.: F24F 11/33, A62C 37/40, A62C 3/06, F25B 49/00, F24F 11/36, F24F 11/89, A62C 35/02, A62C 35/13, F24F 110/65, F25B 30/02

(54) **BRANDSCHUTZVORRICHTUNG**
FIRE PROTECTION DEVICE
DISPOSITIF DE PROTECTION CONTRE L'INCENDIE

(30) Priorität: 25.07.2019 DE 102019120133
(43) Veröffentlichungstag der Anmeldung: 27.01.2021
(73) Patentinhaber: Vaillant GmbH, 42859 Remscheid (DE)
(72) Erfinder: Wohlfeil, Arnold, 42799 Leichlingen (DE)
(74) Vertreter: Popp, Carsten

(56) Entgegenhaltungen:
- WO-A1-2015/032905
- CN-A- 105 387 564
- CN-A- 108 263 771
- CN-B- 104 833 053
- CN-U- 206 669 326
- CN-U- 206 852 959
- CN-Y- 2 512 465
- DE-A1-102011 116 863

## Beschreibung

Die Erfindung betrifft die Bindung entzündlicher Gase im Gehäuse einer außen aufgestellten Wärmepumpe, wenn diese eine Leckage aufweist. In neueren Kältekreisen, zum Beispiel in Wärmepumpen, werden keine Sicherheitskältemittel mehr verwendet, sondern entzündliche natürliche Arbeitsfluide wie z.B. R290 und R1270. Es ist daher erforderlich, die Anlagen mit leistungsfähiger Sicherheitstechnik auszustatten. Gebräuchliche Sicherheitsmaßnahmen bestehen darin, die Arbeitsfluide entweder stark zu verdünnen oder sie adsorptiv zu binden.

So beschreibt die DE 10 2011 116 863 A1 ein Verfahren zur Sicherung einer Vorrichtung für einen thermodynamischen Kreisprozess, welche mit einem Prozessfluid betrieben wird, das mindesten eine umweltgefährliche, giftige und/oder entzündliche Substanz enthält oder daraus besteht. Im Falle einer Leckage in der Vorrichtung für einen thermodynamischen Kreisprozess ein Adsorptionsmittel mit dem Prozessfluid, insbesondere Ammoniak, Propan oder Propen, in Kontakt gebracht und die Substanz durch das Adsorptionsmittel selektiv gebunden. Das Adsorptionsmittel wird nach Gebrauch regeneriert. Als Adsorptionsmittel werden Zeolith, auch in Kombination mit Imidazol oder Phosphaten, ferner CuBTC vorgeschlagen, das Adsorptionsmittel kann in Form einer Schüttung, eines Formkörpers, eines Anstrichs, eines Sprühfilms oder einer Beschichtung ausgestattet sein. Die Trägerstruktur des Formkörpers kann aus Mikrostruktur, Lamellenstruktur, Rohrbündel, Rohrregister und Blech bestehen und muss mechanisch stabil sowie stark oberflächenvergrößernd sein. Eine Umwälzung der potenziell kontaminierten Luft erfolgt üblicherweise kontinuierlich, kann aber auch durch einen Sensor initiiert werden, der die Lüftung nach Erreichen eines Schwellenwerts oder bei einem erkannten Havariefall einschaltet. Die Adsorption kann innerhalb oder außerhalb eines geschlossenen Raumes durchgeführt werden.

Die auftretenden Probleme bei der Sicherheitsauslegung solcher Anlagen werden in der WO 2015/032905 A1 anschaulich beschrieben. So liegt die untere Zündgrenze von Propan als Arbeitsfluid etwa bei 1,7 Volumenprozent in Luft, was 38 g/m³ in Luft entspricht. Sofern der Kälteprozess in einem ihn umgebenden, hermetisch abgeschlossenen, ansonsten aber luftgefüllten Raum mit dem Arbeitsfluid Propan durchgeführt wird, stellt sich das Problem der Erkennung einer kritischen, explosiven Situation nach einer Störung, bei der das Arbeitsfluid in diesen hermetisch abgeschlossenen Raum austritt. Elektrische Sensoren zur Erkennung kritischer Konzentrationen sind nur schwierig explosionsgeschützt auszuführen, weswegen gerade die Propan-Erkennung durch die Sensoren selbst das Explosionsrisiko erheblich verschärft, ausgenommen hiervon sind Infrarotsensoren.

Bei außen aufgestellten Luft-Wasser-Wärmepumpen wird in der Regel eine große Luftmenge durch den Verdampfer geführt, um Wärme zu gewinnen. Im Falle einer Leckage reicht diese Luftmenge sicher aus, um eine Entzündungsgefahr zu unterbinden. Problematisch können aber Fälle werden, bei denen kein Lüfterbetrieb stattfindet, beispielsweise während einer Vereisung und dem darauf einsetzenden Enteisungsvorgang, oder bei einem plötzlichen Stromausfall, oder im Standby. Solche Vorgänge sind neben Wiederinbetriebnahmen nach längeren Stillständen auch gleichzeitig die Situationen, die das größte Risiko generieren, weil dabei mitunter erhebliche Wärmespannungen im System auftreten können, die Kräfte auf Verbindungen ausüben.

Um auch solche seltenen Situationen noch sicher zu beherrschen, wird zusätzlich zu den Maßnahmen von Lüftung oder adsorptiver Bindung ein Brandschutzsystem vorgesehen. Hierbei wird ein automatischer Feuerlöscher mit einem ABC-Pulver oder BC-Pulver eingesetzt, und zwar bevor es brennt. Das zur Brandbekämpfung übliche Mittel wird also untypisch eingesetzt, weiterhin wird es entgegen üblicher Vorgehensweisen gegen drohenden Gasbrand verwendet und im Gehäuse unter Druck zerstäubt. Es wird also das Gehäuse mit Ammoniumhydrogenphosphat, Ammoniumsulfat oder Natriumhydrogencarbonat geflutet. Auch andere Chemikalien, die freie Radikale, wie sie in einer Verbrennungsreaktion gebildet werden, sind einsetzbar. Durch vorheriges Binden freier Radikale wird die Zündung sicher verhindert.

Die CN 104 833 053 B beschreibt eine Außenbox sowie ein Split-Gerät zur Klimatisierung, welches mit einem entzündlichen Arbeitsfluid betrieben wird. Wird eine Leckage festgestellt, wird zunächst geprüft, wie weit man von der unteren Zündgrenze entfernt ist. Sofern man noch deutlich unterhalb dieser Zündgrenze liegt, wird ein Inertgas zugeführt, welches in einer Kartusche vorrätig gehalten wird, außerdem werden die laufenden Geräte abgeschaltet. Sollte jedoch Rauch oder Qualm detektiert werden, wird von einem Brand ausgegangen und es wird Feuerlöschpulver versprüht. Dies ist die herkömmliche Herangehensweise, brennbares Gas wird mit Inertisierung, brennende Festkörper werden mit Feuerlöschpulver bekämpft. Es ist klar, dass auch die Elektronik aufgrund eines Kurzschlusses ein Brandereignis auslösen könnte und Feuerlöschpulver hierfür zur Bekämpfung geeignet ist, und es ist auch sinnvoll, hier sofort mit automatischen Löschmaßnahmen zu beginnen, bevor Dichtungen eines Kältekreises aufgrund eines offenen Brandes oder eines Schwelbrandes zerstört werden und damit die Leckage erst verursachen.

Die Aufgabe der Erfindung ist es daher, ein Brandschutzsystem zur Verfügung zu stellen, welches im Falle einer Leckage kurz vor Erreichen der Zündfähigkeit des Arbeitsfluid-Luftgemischs die Zündfähigkeit unterbindet.

Die Erfindung löst diese Aufgabe durch ein Verfahren unter Verwendung einer Vorrichtung für eine außen aufgestellte Wärmepumpe, die einen Kältekreis mit einem entzündlichen Arbeitsfluid enthält, die Vorrichtung aufweisend
- ein Gehäuse mit mindestens einer Öffnung,
- mindestens einen Behälter mit Feuerlöschpulver unter Druck,
- einen Gasdetektor mit einer Messung des Gehalts an gasförmigem Arbeitsfluid,
- ein schaltbares Absperrventil, welches mit dem Feuerbehälter unter Druck verbunden ist wobei an seinem Auslass eine Dispergiervorrichtung für Feuerlöschpulver vorgesehen wird,
- eine Auslassleitung in das Gehäuse, die mit dem Absperrventil verbunden ist,
- wobei die Auslösung der Freisetzung des Feuerlöschpulvers bei einer Schwelle festgelegt wird, die oberhalb der Warnschwelle von 40 Prozent der Zündfähigkeitsgrenze oder höher liegt und das Feuerlöschpulver bei Auslösung unter Druck fein vernebelt oder zerstäubt wird.

Die Dispergiervorrichtung für Feuerlöschpulver kann im einfachsten Fall ein schräges und/oder ein gebogenes Blech sein, welches das austretende Feuerlöschpulver in alle Richtungen leitet und durch die Energie des Aufpralls fein vernebelt bzw. zerstäubt.

Die Auslösung der Freisetzung des Feuerlöschpulvers wird bei einer Schwelle festgelegt, die oberhalb der Warnschwelle von 40 Prozent der Zündfähigkeitsgrenze liegt. Diese Auslöseschwellen liegen wahlweise bei 50 Prozent, 70 Prozent, 80 Prozent oder 90 Prozent des Anteils des gasförmigen Arbeitsfluids, welches zündfähig wäre.

In einer weiteren Ausgestaltung ist vorgesehen, dass mehrere Behälter mit Feuerlöschpulver unter Druck bei unterschiedlichen Auslöseschwellen auslösen.

In weiteren Ausgestaltungen ist vorgesehen, dass diese Behälter mit unterschiedlichen Feuerlöschpulvern beschickt sind, und zunächst die sanftesten Feuerlöschpulver und sukzessive stärkere Feuerlöschpulver nacheinander zum Einsatz kommen. Dies ist vor allem dann sinnvoll, wenn sich die Leckage nach dem ersten Entleeren des ersten Behälters weiter vergrößert und die Konzentration des Arbeitsfluids weiter ansteigen sollte.

Weitere Ausgestaltungen betreffen die Feuerlöschpulver. Hierbei wird vorgesehen, dass als Feuerlöschpulver eine oder mehrere Trockenlöschpulver der Klassen BC oder ABC ausgewählt werden. Speziell ist vorgesehen, dass als Feuerlöschpulver Monoammoniumphosphat, Ammoniumsulfat, Natriumhydrogenkarbonat, Kaliumhydrogenkarbonat, Kaliumsulfat, Kaliumchlorid, Natriumchlorid, oder Kalium-Ammonium-Carbamat oder Mischungen daraus sowie Zusätze für die Hydrophobierung, Förderfähigkeit und Stabilität verwendet werden.

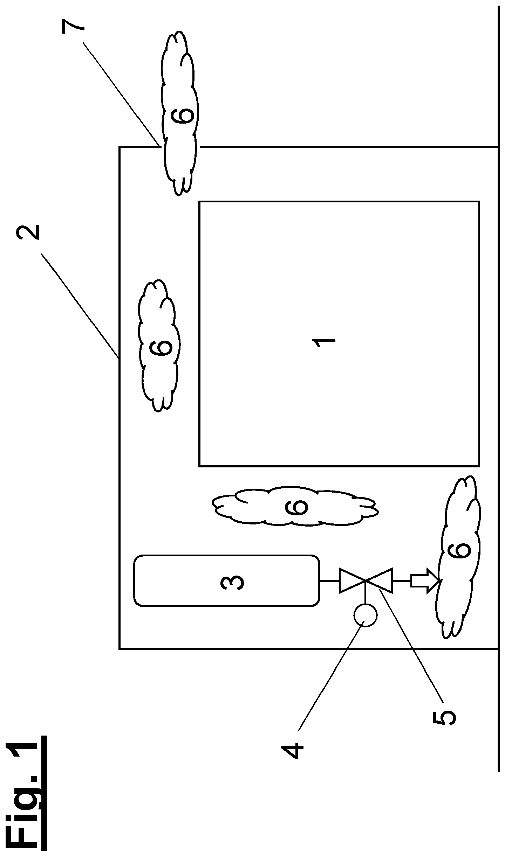

Die Erfindung wird nachfolgend anhand einer Prinzipskizze näher erläutert. Hierbei zeigt Fig. 1 eine außen aufgestellte Wärmepumpe.

Fig. 1 zeigt eine Wärmepumpe 1 in einem Gehäuse 2, wobei auf die Anschlüsse nicht weiter eingegangen wird. In diesem Gehäuse wird der Pulverlöschbehälter 3 angeordnet, der unter Druck steht. Sobald der Gasdetektor 4 anzeigt, dass die Konzentration an entzündlichem Arbeitsfluid einen Wert von 80 Prozent der Zündgrenze in Luft erreicht hat, öffnet das Ventil 5 und entlässt das Feuerlöschpulver in das Gehäuse 2. Aufgrund des Druckanstiegs wird ein großer Teil der im Gehäuse befindlichen kontaminierten Luft zusammen mit dem vernebelten Feuerlöschpulver 6 durch eine oder mehrere Öffnungen 7 ins Freie entlüftet und es kommt nicht zur Entzündung des Gemisches aus Luft und gasförmigem Arbeitsfluid.

### Bezugszeichenliste

- 1: Wärmepumpe
- 2: Gehäuse
- 3: Pulverlöschbehälter
- 4: Gasdetektor
- 5: Ventil
- 6: Vernebeltes Feuerlöschpulver
- 7: Gehäuseöffnung

## Patentansprüche

1. Verfahren unter Verwendung einer Vorrichtung für eine außen aufgestellte Wärmepumpe (1), die einen Kältekreis mit einem entzündlichen Arbeitsfluid enthält, die Vorrichtung aufweisend
- ein Gehäuse (2) mit mindestens einer Öffnung (7),
- mindestens einen Behälter (3) mit Feuerlöschpulver unter Druck
- einen Gasdetektor (4) mit einer Messung des Gehalts an gasförmigem Arbeitsfluid,
- ein schaltbares Absperrventil (5), welches mit dem Behälter (3) unter Druck verbunden ist wobei an seinem Auslass eine Dispergiervorrichtung für Feuerlöschpulver vorgesehen wird,
- eine Auslassleitung in das Gehäuse (1), die mit dem Absperrventil (5) verbunden ist,
**dadurch gekennzeichnet, dass**
- die Auslösung der Freisetzung des Feuerlöschpulvers bei einer Schwelle festgelegt wird, die oberhalb der Warnschwelle von 40 Prozent der Zündfähigkeitsgrenze oder höher liegt und das Feuerlöschpulver bei Auslösung unter Druck fein vernebelt oder zerstäubt wird.

2. Verfahren nach Anspruch 1, **dadurch gekennzeichnet, dass** mehrere Behälter (3) mit Feuerlöschpulver unter Druck vorgesehen werden, die bei unterschiedlichen Auslöseschwellen auslösen.

3. Verfahren nach Anspruch 2, **dadurch gekennzeichnet, dass** mehrere Behälter (3) mit Feuerlöschpulver unter Druck vorgesehen werden und zum Einsatz kommen, die mit unterschiedlichen Feuerlöschpulvern beschickt sind.

4. Verfahren nach Anspruch 1, **dadurch gekennzeichnet, dass** die Behälter mit unterschiedlichen Feuerlöschpulvern beschickt sind, und zunächst die sanftesten Feuerlöschpulver und sukzessive stärkere Feuerlöschpulver nacheinander zum Einsatz kommen.

5. Verfahren nach einem der Ansprüche 1 bis 4, **dadurch gekennzeichnet, dass** als Feuerlöschpulver eine oder mehrere Trockenlöschpulver der Klassen BC oder ABC ausgewählt werden.

6. Verfahren nach Anspruch 5, **dadurch gekennzeichnet, dass** als Feuerlöschpulver Monoammoniumphosphat, Ammoniumsulfat, Natriumhydrogenkarbonat, Kaliumhydrogenkarbonat, Kaliumsulfat, Kaliumchlorid, Natriumchlorid, oder Kalium-Ammonium-Carbamat oder Mischungen daraus sowie Zusätze für die Hydrophobierung, Förderfähigkeit und Stabilität verwendet werden.

## Claims

1. Method using a device for a heat pump (1) erected outside, which contains a refrigeration circuit with an inflammable working fluid, the device having
- a housing (2) with at least one opening (7),
- at least one container (3) with fire extinguishing powder under pressure,
- a gas detector (4) with a measurement of the content of gaseous working fluid,
- a switchable shut-off valve (5) which is connected under pressure to the container (3) and wherein a dispersion device for fire extinguishing powder is provided at its outlet,
- an outlet line into the housing (1) which is connected to the shut-off valve (5),
**characterised in that**
- the triggering of the release of the fire extinguishing powder is fixed at a threshold which is above the warning threshold of 40% of the ignition capability limit or higher and the fire extinguishing powder is finally nebulised or atomised under pressure when triggering occurs.

2. Method according to claim 1, **characterised in that** several containers (3) with fire extinguishing powder under pressure are provided, which trigger at different trigger thresholds.

3. Method according to claim 2, **characterised in that** several containers (3) with fire extinguishing powder under pressure are provided and are employed, which are equipped with different fire extinguishing powders.

4. Method according to claim 1, **characterised in that** the containers are equipped with different fire extinguishing powders, and first the gentlest fire extinguishing powder and successively stronger fire extinguishing powders are employed one after another.

5. Method according to any of claims 1 to 4, **characterised in that** as a fire extinguishing powder one or several dry extinguishing powders of the classes BC or ABC are selected.

6. Method according to claim 5, **characterised in that** as a fire extinguishing powder mono ammonium phosphate, ammonium sulfate, sodium hydrogen carbonate, potassium hydrogen carbonate, potassium sulfate, potassium chloride, sodium chloride, or potassium ammonium carbamate or mixtures thereof, as well as additives for hydrophobing, conveyability and stability are used.

## Revendications

1. Procédé utilisant un dispositif pour une pompe à chaleur (1) installée à l'extérieur, qui contient un circuit de réfrigération avec un fluide de travail inflammable, le dispositif présentant
- un boîtier (2) avec au moins une ouverture (7),
- au moins un récipient (3) avec une poudre d'extinction d'incendie sous pression
- un détecteur de gaz (4) avec une mesure de la teneur en fluide de travail gazeux,
- une soupape d'arrêt commutable (5) qui est reliée sous pression au récipient (3), dans lequel est prévu au niveau de sa sortie un dispositif de dispersion pour la poudre d'extinction d'incendie,
- une conduite d'évacuation dans le boîtier (1) qui est reliée à la soupape d'arrêt (5),
**caractérisé en ce que**
- le déclenchement de la libération de la poudre d'extinction d'incendie est fixé lorsqu'un seuil est supérieur au seuil d'alerte de 40 pour cent de la limite de capacité d'allumage ou plus et la poudre d'extinction d'incendie est pulvérisée ou atomisée finement lors du déclenchement sous pression.

2. Procédé selon la revendication 1, **caractérisé en ce que** plusieurs récipients (3) avec de la poudre d'extinction d'incendie sous pression sont prévus, qui se déclenchent à différents seuils de déclenchement.

3. Procédé selon la revendication 2, **caractérisé en ce que** plusieurs récipients (3) avec de la poudre d'extinction d'incendie sous pression sont prévus et utilisés, lesquels sont chargés avec différentes poudres d'extinction d'incendie.

4. Procédé selon la revendication 1, **caractérisé en ce que** les récipients sont chargés avec différentes poudres d'extinction d'incendie et ensuite les poudres d'extinction d'incendie les plus douces et les poudres d'extinction d'incendie plus dures successives sont utilisées les unes après les autres.

5. Procédé selon l'une quelconque des revendications 1 à 4, **caractérisé en ce qu'**une ou plusieurs poudres d'extinction sèches de classes BC ou ABC sont choisies en tant que poudre d'extinction d'incendie.

6. Procédé selon la revendication 5, **caractérisé en ce que,** en tant que poudre d'extinction d'incendie, du phosphate monoammonique, du sulfate d'ammonium, de l'hydrogénocarbonate de sodium, de l'hydrogénocarbonate de potassium, du sulfate de potassium, du chlorure de potassium, du chlorure de sodium ou du carbamate de sodium et d'ammonium ou des mélanges de ceux-ci ainsi que des additifs pour l'hydrophobisation, la transportabilité et la stabilité sont utilisés.
